# DEMANDE DE BREVET EUROPEEN

(11) **EP 1 022 328 A1**
(43) Date de publication de la demande: **26.07.2000**
(21) Numéro de dépôt: 99402917.1
(22) Date de dépôt: 23.11.1999
(51) Int. Cl.: C12G 1/08, C12G 1/06

(54) **Pièce en matière plastique pour la récupération du dépôt de fermentation d'un vin et pour refroidir plus vite au bac à glace**

(30) Priorité: 24.11.1998 FR 9815311
(71) Demandeur: Langlois, Maryvonne, 51200 Epernay (FR)
(72) Inventeur: Langlois, Maryvonne, 51200 Epernay (FR)

(57) **Abrégé**

L'invention a trait à une pièce en matière plastique appelée traditionnellement "bidule", utilisée dans le domaine du vin élaboré selon la méthode champenoise et destinée à être placée sur le goulot (10) d'une bouteille (1) pour la récupération et l'évacuation du dépôt (4) issu de la fermentation.

Cette pièce est caractérisée en ce qu'elle comporte un moyen (30, 31; 5) permettant son adaptation sur le goulot (10) d'une bouteille ainsi qu'un moyen (32; 6) permettant d'étaler ledit dépôt (4).

## Description

La présente invention a pour objet, dans le domaine du vin élaboré selon la méthode champenoise, une pièce en matière plastique appelée traditionnellement "bidule".

Un vin de champagne ou analogue est élaboré selon la méthode champenoise, c'est-à-dire qu'après une première fermentation dite "alcoolique" en cuve, et éventuellement une deuxième fermentation dite "malolactique", on provoque en bouteille une seconde, ou troisième, fermentation en ajoutant au vin des ferments qui vont lentement transformer le sucre en alcool et en gaz carbonique. Après une période de vieillissement, la fermentation produit un dépôt qui est évacué lors de l'opération dite de dégorgement.

En pratique, après introduction des ferments, on place dans l'embouchure du goulot un bidule qui consiste en une pièce en matière plastique comportant d'une part une partie tubulaire d'un diamètre externe correspondant au diamètre interne du goulot, et d'autre part un disque qui ferme une extrémité de ladite partie tubulaire en débordant légèrement celle-ci périphériquement afin de constituer une butée qui limite l'enfoncement. Puis, par des opérations de remuage, la bouteille étant sur pointe c'est-à-dire tête en bas, on fait descendre le dépôt dans le goulot jusque dans le bidule, lequel sera évacué avec le dépôt lors du dégorgement.

Afin de laisser échapper le moins de vin possible lors du dégorgement qui est réalisé bouteille à l'endroit, et d'éviter que le dépôt ne redescende dans la bouteille, on refroidit le goulot jusqu'à la formation dans le bidule d'un glaçon renfermant les particules du dépôt, il suffit ensuite d'évacuer le bidule et le glaçon qui renferme le dépôt, le vin évacué sous forme de glace étant ensuite remplacé.

Dans la plupart des cas, le refroidissement est réalisé en plongeant les goulots dans un bain de saumure à environ -20°C pendant approximativement une vingtaine de minutes, car si la glace se forme relativement rapidement sur la paroi interne du goulot il faut plus de temps pour que le dépôt soit congelé à coeur.

Or, ce temps de congélation constitue un inconvénient notamment lorsque l'installation est destinée à traiter un grand nombre de bouteilles. En effet, pour alimenter des postes de dégorgement automatique, lesquels fonctionnent actuellement à une cadence élevée, il convient de préparer à l'avance un grand nombre de bouteilles, et il est donc nécessaire de disposer d'une installation de refroidissement de grande contenance. En pratique, les bouteilles défilent goulots en bas plongés dans la saumure ou glycol contenue dans un bac linéaire. Or, un tel bac nécessite un espace important, et de plus, grand consommateur d'énergie.

Certains ont tenté d'utiliser d'autres méthodes de refroidissement, par gaz réfrigérant, ou par injection de froid au coeur du goulot à l'aide une pièce métallique par exemple, mais qui ne donnent pas satisfaction d'un point de vue coût et faisabilité industrielle.

La présente invention a pour but de remédier à ces divers inconvénients en proposant un bidule cônique permettant de réduire considérablement le temps de congélation, sans modifier l'installation des bacs de refroidissement existant.

Le bidule cônique objet de la présente invention se caractérise essentiellement en ce qu'il comporte un moyen permettant son adaptation sur le goulot d'une bouteille ainsi qu'un moyen permettant d'étaler le dépôt.

Le dépôt étant étalé sur le pourtour extérieur du bidule cônique, sans toutefois être dispersé, son épaisseur est moindre ce qui permet une pise de glace plus rapide.

Selon une caractéristique additionnelle du bidule selon l'invention, le moyen permettant son adaptation sur une bouteille consiste en une partie tubulaire, d'un diamètre externe sensiblement égal au diamètre interne du goulot de la bouteille, fermée à une extrémité par un disque d'un diamètre légèrement supérieur au dit diamètre interne du goulot pour réaliser l'étanchéité avec la pression du vin en méthode champenoise dite traditionnelle.

Selon une autre caractéristique additionnelle du bidule selon l'invention, le moyen permettant d'étaler le dépôt consiste en un élément introduit dans le goulot de la bouteille et qui s'étend dans le dit goulot à une certaine distance de la paroi interne de celui-ci.

Selon un premier mode de réalisation du bidule selon l'invention, l'élément cônique est solidaire du moyen permettant l'adaptation sur le goulot, provenant du moulage de la pièce en matière plastique.

Selon une caractéristique additionnelle du bidule selon le premier mode de réalisation, l'élément est de forme conique, sa partie la plus large étant du côté du moyen permettant l'adaptation sur le goulot.

Selon une autre caractéristique additionnelle du bidule selon le premier mode de réalisation, l'élément est creux.

Selon un second mode de réalisation du bidule selon l'invention, l'élément est dissocié du moyen permettant son adaptation sur le goulot, et il est apte à venir se placer contre ledit moyen lors du retournement de la bouteille.

Selon une caractéristique additionnelle du bidule selon le second mode de réalisation, l'élément se présente sous la forme d'un cylindre dont chacune des faces extrêmes comporte centralement un évidement, destiné à venir se caler sur la bavure issue de moulage, que comporte centralement le moyen permettant l'adaptation sur le goulot.

Ce second mode de réalisation est notamment destiné à permettre l'utilisation des bidules existants tout en bénéficiant des avantages de l'invention.

Le bidule selon l'invention permet, outre de diminuer, environ de moitié, le temps de congélation, de réduire la taille du glaçon et donc de réduire la quantité de vin perdue.

D'autres caractéristiques et avantages de l'invention apparaîtront de la description et des dessins annexés qui représentent des modes de réalisations préférentiels.

Dans les dessins annexés:
- la figure 1 représente une vue partielle en coupe selon un plan longitudinal médian du goulot d'une bouteille équipée d'un premier mode de réalisation du bidule selon l'invention.
- la figure 2 représente une vue partielle en coupe selon un plan longitudinal médian du goulot d'une bouteille équipée d'un second mode de réalisation du bidule selon l'invention.

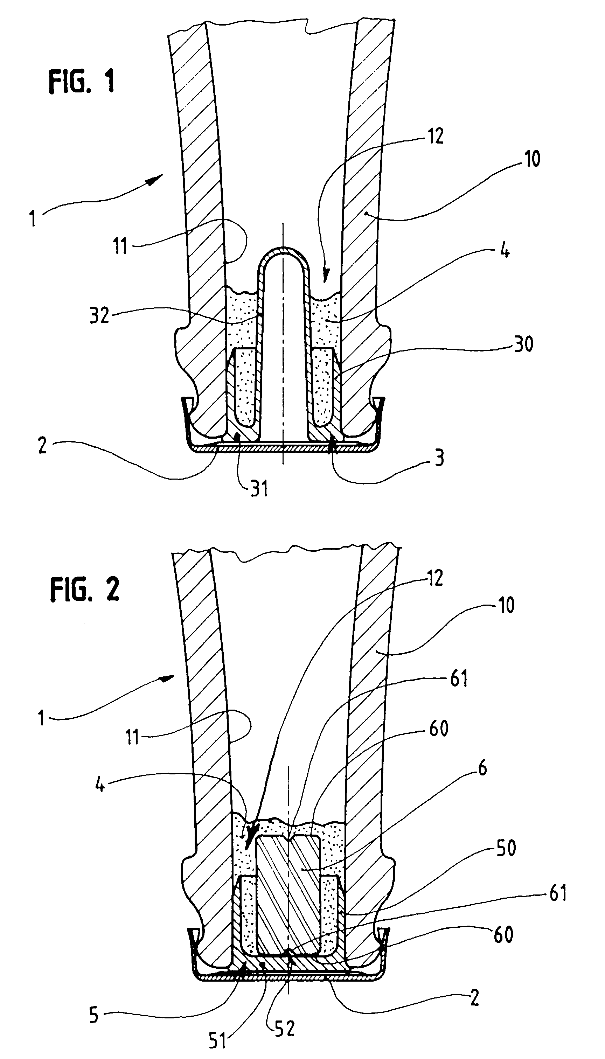

Si on se réfère à la figure 1, on peut voir le goulot 10 d'une bouteille 1, fermé par une capsule 2, et muni d'un bidule 3 selon un premier mode de réalisation, ainsi qu'un dépôt 4 issu de la fermentation.

Le bidule 3 comporte un moyen pour son adaptation sur le goulot 10, qui consiste en une partie tubulaire 30 d'un diamètre externe sensiblement égal au diamètre interne du goulot 10, fermé à une extrémité par un disque 31 d'un diamètre légèrement supérieur au diamètre interne du goulot 10 pour éviter l'enfoncement du bidule 3 dans ce dernier.

On notera que le moyen d'adaptation peut se présenter sous une autre forme.

Selon l'invention, le disque 31 présente centralement un élément conique 32 qui fait saillie intérieurement à la partie tubulaire 30, à une certaine distance de celle-ci.

L'élément conique 32 crée un volume à l'intérieur du goulot 10 que ne peut occuper le dépôt 4 qui se trouve repoussé le long de la paroi 11 du goulot 10 dans un espace 12 de faible épaisseur créé entre la paroi 11 et l'élément conique 32.

L'étalement du dépôt 4 permet une congélation plus rapide de celui-ci, et réduit la quantité de vin congelée qui sera perdue lors du dégorgement.

Dans ce mode de réalisation, l'élément conique 32 est creux, il peut toutefois être plein.

Un élément conique 32 creux présente toutefois l'avantage d'une congélation plus rapide du dépôt 4, du fait que le froid est transmis plus rapidement au dépôt 4 par l'intérieur, l'air étant plus conducteur que la matière plastique.

Si on se réfère maintenant à la figure 2, on peut voir un second mode de réalisation du bidule selon l'invention.

Ce bidule est constitué de deux parties dissociées, un bidule 5 analogue aux bidules existants, et un élément 6 destiné à coopérer avec le bidule 5 pour former un bidule selon l'invention.

Le bidule 5 comporte une partie tubulaire 50 fermée à une extrémité par un disque 51. D'autre part, le bidule 5 étant réalisé par moulage, le disque 51 comporte centralement et intérieurement une bavure de moulage qui se présente sous la forme d'un plot 52.

L'élément 6 consiste en un cylindre d'un diamètre inférieur au diamètre interne de la partie tubulaire 50, et dont chacune des faces extrêmes 60 présente centralement un évidement 61.

Lorsque la bouteille 1 est mise sur pointe, l'élément 6, qui est plein et réalisé dans une matière d'une densité supérieure à celle du vin, descend dans le goulot pour venir se placer à l'intérieur de la partie tubulaire 50 contre le disque 51.

Le centrage de l'élément 5 dans la partie tubulaire 50 est réalisé par l'intermédiaire de l'évidement 61 d'une face 60 qui vient se caler sur le plot 52.

De même que pour le premier mode de réalisation, l'élément 6 crée un espace 12 entre la paroi 11 et lui-même, dans lequel prend place le dépôt 4, dont la faible épaisseur permet une congélation rapide.

On observera que le cylindre définissant l'élément 6 est de nature creuse et présente un volume intérieur délimité par une enveloppe perméable en contact avec le vin. Dans ce volume intérieur sont susceptibles d'être introduites des substances nécessaires au traitement, par la méthode champenoise, du vin contenu dans la bouteille 1.

A ce propos, on observera que de telles substances, notamment des levures, peuvent diffuser au travers de l'enveloppe perméable pour se retrouver dans le vin. De telles substances peuvent encore se transformer en produits secondaires au contact de ce vin ou de ses constituants ayant, au préalable diffusé dans le cylindre. De tels produits secondaires traversent alors ladite enveloppe pour se mélanger au vin. La nature perméable de l'enveloppe de ce cylindre permet, par exemple, la prise de mousse du vin sans que ce dernier ne se trouble.

Il va de soi que la présente invention ne saurait être limitée à la description qui précède de plusieurs de ses modes de réalisation, susceptible de subir quelques modifications sans pour autant sortir du cadre de l'invention.

## Revendications

1. Pièce en matière plastique appelée traditionnellement "bidule", utilisée dans le domaine du vin élaboré selon la méthode champenoise dite traditionnelle, destinée à être placée sur le goulot (10) d'une bouteille (1) pour la récupération et l'évacuation du dépôt (4) issu de la fermentation, caractérisée en ce qu'elle comporte un moyen (30,31; 5) permettant d'étaler le dit dépôt (4) afin de le refroidir plus rapidement lors du trempage.

2. Pièce selon la revendication 1, caractérisée en ce que le moyen permettant son adaptation sur une bouteille (1) comporte une partie tubulaire(30; 50), d'un diamètre externe sensiblement égal au diamètre interne du goulot (10) de la bouteille (1), fermée à une extrémité par un disque (31;51) d'un diamètre légèrement supérieur au dit diamètre interne du goulot (11).

3. Pièce selon la revendication 2, caractérisée en ce que le moyen permettant d'étaler le dépôt consiste en élément (32;6) introduit dans le goulot (10) de la bouteille (1) et qui s'étend dans le dit goulot (10) à une certaine distance de la parois interne (11) de celui-ci.

4. Pièce selon l'une quelconque des revendications précédentes, caractérisée en ce que le cône est d'une certaine hauteur (32), la partie la plus large de celui-ci est solidaire du bidule (31) permettant l'adaptation sur le goulot (1), provenant du moulage de la pièce en plastique.

5. Pièce selon la revendication 4, caractérisée en ce que l'élément (32) est creux, et recouvert hermétiquement d'une capsule métallique, ce qui permet un meilleur refroidissement du dépôt, car du fait de sa composition chimique, l'air est plus facile à réfrigérer q'une matière pleine lors du trempage du goulot dans la saumure ou le glycol.

6. Pièce selon la revendication précédente 5, caractérisée en ce que l'élément (32) de part le volume qu'il occupe dans le goulot (10) de la bouteille (1), accélère la congélation du dépôt (4) et réduit la perte de vin lors de l'extraction.

7. Pièce selon la revendication 5, caractérisée en ce que l'élément (32) subissant un refroidissement, la matière plastique se rétracte, ce qui favorise avec la pression naturelle dans la bouteille (1) une meilleure expulsion du dépôt geler (4), sans laisser de résidus sur la paroi interne du goulot (11) de la bouteille (1).

8. Pièce selon l'une quelconque des revendications 1 à 3, caractérisée en ce que l'élément (6) est dissocié du moyen (5) permettant son adaptation sur le goulot (1), et il est apte à venir se placer contre le dit moyen (5) lors du retournement de la bouteille (1).

9. Selon la revendication (8), caractérisée en ce que l'élément (6) se présente sous la forme d'un cylindre dont chacune des faces extrêmes (60) comportent centralement un évidement (61), destiné à venir se caler sur la bavure (52) issue de moulage, que comporte centralement le moyen permettant l'adaptation sur le goulot (10).

10. Pièce selon la revendication (9), caractérisée en ce que le cylindre de l'élément (6) est de nature creuse et présente un volume intérieur, d'une part, apte à contenir des substances pour le traitement du vin contenue dans la bouteille (1) et d'autre part, délimité par une enveloppe en contact avec le vin et perméable à ce dernier, à ses constituants et/ou aux substances contenues dans le volume intérieur.
